# EUROPÄISCHE PATENTANMELDUNG

(11) **EP 4 424 994 A1**
(43) Veröffentlichungstag der Anmeldung: **04.09.2024**
(21) Anmeldenummer: 24160738.1
(22) Anmeldetag: 01.03.2024
(51) Int. Cl.: F04C 2/10, B60G 13/08, B60G 17/015

(54) **FLEXIBLES MOTOR-PUMPE-SYSTEM**

(30) Priorität: 01.03.2023 DE 102023105060
(71) Anmelder: RAPA Automotive GmbH & Co. KG, 95100 Selb (DE)
(72) Erfinder: Rubitzko, Tim, 95100 Selb (DE); Kemnitz, Rocco, 95100 Selb (DE)
(74) Vertreter: Klunker IP Patentanwälte PartG mbB

(57) **Zusammenfassung**

Die Erfindung betrifft eine Vorrichtung (1) zum Bereitstellen von hydraulischer Energie, insbesondere in einem Fahrwerksystem (50) eines Fahrzeugs, umfassend
- zumindest eine Motor-Pumpe-Gruppe (21a) und
- eine Elektronikeinheit (11a) zum Ansteuern der Motor-Pumpe-Gruppe,

wobei die Motor-Pumpe-Gruppe in einem Motor-Pumpe-Gehäuse (21) angeordnet ist, das eine Motor-Pumpe-Einhausung (20) bildet oder Teil einer Motor-Pumpe-Einhausung ist,
wobei die Elektronikeinheit in einem Elektronikeinheit-Gehäuse (11) angeordnet ist, das eine Elektronikeinheit-Einhausung (10) bildet oder Teil einer Elektronikeinheit-Einhausung ist, und
wobei die Elektronikeinheit und die Motor-Pumpe-Gruppe über einen Versorgungsstrang (30) elektrisch verbunden sind.

## Beschreibung

### GEBIET DER ERFINDUNG

Die vorliegende Erfindung betrifft ein Hydrauliksystem für ein aktives Fahrwerk eines Fahrzeugs, einen Achssatz und einen Bausatz dafür sowie eine Fahrwerkachse und ein Fahrwerksystem mit einem derartigen Hydrauliksystem.

### HINTERGRUND DER ERFINDUNG

Aktive Fahrwerksysteme sind beispielsweise aus DE 39 02 743 C1 oder DE 2 020 292 A1 bekannt. Dabei wird beispielsweise zwischen vollaktiven und semiaktiven Fahrwerksystemen unterschieden, in denen die Aufhängung entweder für jedes Rad einzeln oder achsweise aktiv angesteuert werden kann. Ein aktives Fahrwerk weist hydraulisch steuerbare Stoßdämpfer auf, bei denen die beiden Druck- bzw. Dämpferkammern des Dämpferzylinders eines Stoßdämpfers nicht lediglich über ein oder mehrere, gegebenenfalls steuerbare Dämpfungs- bzw. Drosselventile (Dämpferverstellventile) miteinander verbunden sind, sondern bei denen beispielsweise der Füllzustand der Zylinderkammern aktiv gesteuert wird und entsprechend bedarfsweise hydraulische Kräfte in das Fahrwerk eingeleitet werden. Die beiden Zylinderkammern eines Stoßdämpfers können beispielsweise parallel oder alternativ zu den Dämpfungs- bzw. Drosselventilen über eine hydraulische Pumpe verbunden sein, die von einem Elektromotor angetrieben werden kann und diesen gegebenenfalls auch als elektrischen Generator bzw. Elektromotorgenerator antreiben kann (Rekuperationsbetrieb). Zusätzlich oder alternativ können mit Hilfe der Pumpe gegebenenfalls auch anderweitige Einstellungen in dem Stoßdämpfer vorgenommen werden.

Durch das Pumpen von Hydraulikfluid kann beispielsweise Nick- und/oder Wankbewegungen des Fahrzeugs entgegengewirkt werden. Umgekehrt kann eine solche Anordnung aus Stoßdämpfer, hydraulischer Pumpe und Elektromotor auch durch Rekuperation gewonnene elektrische Energie in das Bordnetz des Fahrzeugs zurückspeisen. Des Weiteren können auch unterschiedliche Dämpfungsverhalten eingestellt werden, beispielsweise "weich" oder "hart" oder auch in Abhängigkeit vom Fahrverhalten und/oder der Untergrundbeschaffenheit.

Generell werden somit die hydraulische Pumpe und der Elektromotorgenerator bzw. Elektromotor im aktiven Fahrwerk zum Ein- und/oder Ausleiten hydraulischer Energie aus dem (Fahrwerk-)System verwendet. Dabei bilden die Pumpe und der Elektromotor eine gemeinsame, kompakte Baueinheit, die im Folgenden als Motor-Pumpe-Gruppe bezeichnet wird und an der weiterhin eine Elektronikeinheit (Antriebs- und/oder Ansteuereinheit, ECU, electric control unit) fest angeordnet ist, wobei die resultierende kompakte Baueinheit auch als Motor-Pumpe-Einheit (MPE) bezeichnet wird. Derartige Motor-Pumpe-Einheiten und darauf aufbauende MPE-Achssätze sind beispielsweise aus der Druckschrift DE 10 2019 111 980 A1 bekannt, deren Offenbarungsgehalt, insbesondere hinsichtlich der Ausgestaltung der Motor-Pumpe-Einheiten, in den Offenbarungsgehalt der vorliegenden Schrift aufgenommen wird. Weiterhin ist als kompakte Baueinheit auch ein MPE-Achssatz mit zwei Motor-Pumpe-Gruppen und einer gemeinsamen Elektronikeinheit beispielsweise aus der Druckschrift DE 10 2019 118 384 A1 und der Druckschrift DE 10 2021 105 032 A1 bekannt, deren Offenbarungsgehalt, insbesondere hinsichtlich der Ausgestaltung der MPE-Achssätze und deren Gehäuse, in den Offenbarungsgehalt der vorliegenden Schrift aufgenommen wird. Derartige Vorrichtungen wandeln somit elektrische in hydraulische Energie und gegebenenfalls auch umgekehrt und werden auch als elektrohydraulische Maschinen bezeichnet.

Dabei ist ein aktives Fahrwerksystem häufig jedoch nur eine optionale Ausstattung für ein Kraftfahrzeug. Zudem ist Bauraum in Kraftfahrzeugen generell knapp. Dies erschwert die Unterbringung derartiger optionaler elektrohydraulischer Maschinen, insbesondere wenn diese nicht bereits frühzeitig, etwa bei der sogenannten Packageverteilung, berücksichtigt wurden.

### ZUSAMMENFASSUNG DER ERFINDUNG

Aufgabe der Erfindung ist es, eine Vorrichtung zum Bereitstellen von hydraulischer Energie in einem Fahrwerksystem anzugeben, welche flexibel an knappe Bauraum-Erfordernisse angepasst werden kann. Es ist weiterhin Aufgabe der Erfindung eine Fahrwerkachse und ein Fahrwerksystem, insbesondere mit einer derartigen Vorrichtung anzugeben.

Die Aufgabe wird gelöst durch die Gegenstände der unabhängigen Ansprüche. Bevorzugte Ausgestaltungen und Weiterbildungen sind in den davon abhängigen Ansprüchen angegeben.

Die erfindungsgemäße Vorrichtung (im Folgenden auch als Motor-Pumpe-System bzw. elektrohydraulische Maschine bezeichnet) ist eine Vorrichtung zum Bereitstellen bzw. zum Ein- und/oder Ausleiten von hydraulischer Energie, insbesondere in und/oder aus einem Fahrwerksystem eines Fahrzeugs. Die erfindungsgemäße Vorrichtung umfasst die folgenden Baugruppen (oder besteht daraus):
- eine Motor-Pumpe-Gruppe mit einer hydraulischen Pumpe und einem Elektromotor bzw. Elektromotorgenerator zum Antreiben der hydraulischen Pumpe, und
- eine Elektronikeinheit zum Ansteuern bzw. zum Betrieb der Motor-Pumpe-Gruppe, das heißt zur Abgabe bzw. zum Austausch von Steuersignalen mit der Motor-Pumpe-Gruppe und/oder zur elektrischen Leistungsversorgung bzw. zum elektrischen Antrieb des Elektromotors.

Dabei ist die Motor-Pumpe-Gruppe in einem Motor-Pumpe-Gehäuse angeordnet, das zugleich eine Motor-Pumpe-Einhausung bildet oder ein Teil bzw. ein Teilgehäuse einer Motor-Pumpe-Einhausung ist und/oder eingerichtet ist, ein Teil bzw. ein Teilgehäuse einer Motor-Pumpe-Einhausung zu sein. Weiterhin ist die Elektronikeinheit in einem Elektronikeinheit-Gehäuse angeordnet, das zugleich eine Elektronikeinheit-Einhausung bildet oder ein Teil bzw. ein Teilgehäuse einer Elektronikeinheit-Einhausung ist und/oder eingerichtet ist, ein Teil bzw. ein Teilgehäuse einer Elektronikeinheit-Einhausung zu sein.

Unter einer Einhausung wird vorliegend ein (mehrstückiges) geschlossenes und/oder dichtes Gehäuse bzw. Gesamtgehäuse verstanden, das genau eine Baugruppe oder mehrere Baugruppen beherbergt bzw. umschließt. Eine Einhausung ist dicht gegenüber Verschmutzungen und anderen Umwelteinflüssen, beispielsweise luftdicht, wasserdicht oder spritzwasserdicht, womit die zumindest eine in der Einhausung beherbergte Baugruppe beispielsweise an einer Fahrzeugunterseite verbaut werden kann. Eine Einhausung ist weiterhin bevorzugt auch dicht bzw. abschirmend gegenüber elektromagnetischer Strahlung, die beispielsweise aufgrund von hohen Wechselströmen in dem Motor-Pumpe-System generiert wird, um die EMV-Belastung gering zu halten bzw. zu reduzieren. Entsprechend bildet die Motor-Pumpe-Einhausung eine Einhausung für zumindest oder genau die Motor-Pumpe-Gruppe und die Elektronikeinheit-Einhausung bildet eine Einhausung für zumindest oder genau die Elektronikeinheit.

Unter einem Gehäuse wird vorliegend ein ein- oder mehrstückiger Träger für (genau) eine Baugruppe verstanden. Bevorzugt spannt das Gehäuse einen Innenraum auf, der die Baugruppe des Gehäuses teilweise oder vollständig beherbergt bzw. umschließt. Weiterhin bildet das Gehäuse erfindungsgemäß einen Teil bzw. ein Teilgehäuse der Einhausung und/oder ist eingerichtet, ein Teil bzw. ein Teilgehäuse der Einhausung der jeweiligen Baugruppen zu sein. Im einfachsten Fall bildet das Gehäuse zugleich die Einhausung der Baugruppe und die Außenseite des Gehäuses ist zugleich die Außenseite der jeweiligen Einhausung. In der Regel bildet das Gehäuse jedoch nur bzw. zumindest einen Teil der Außenseite der jeweiligen Einhausung, die dann aus dem Gehäuse und zumindest einem (oder mehreren) weiteren (korrespondierenden) Gehäusen oder Teilgehäusen besteht.

Die erfindungsgemäße Vorrichtung umfasst weiterhin (genau oder zumindest) einen Versorgungsstrang, der die Elektronikeinheit und die Motor-Pumpe-Gruppe elektrisch verbindet. Im einfachsten Fall stellt der Versorgungsstrang bzw. die Elektronikeinheit (über den Versorgungsstrang) die komplette elektrische Versorgung der Motor-Pumpe-Gruppe vollständig bereit bzw. stellt der Versorgungsstrang die einzige elektrische Anbindung der Motor-Pumpe-Gruppe dar. Die Vorrichtung weist dann genau einen von der Motor-Pumpe-Gruppe zur Elektronikeinheit führenden Kabel- bzw. Versorgungsstrang auf.

Der (externe) Versorgungsstrang verläuft außerhalb der Einhausungen von Elektronikeinheit und Motor-Pumpe-Gruppe, verbindet die beiden voneinander verschiedenen bzw. räumlich beabstandeten Baugruppen bzw. Baueinheiten bzw. Einhausungen und schafft somit ein Motor-Pumpe-System mit zwei kleinen Baueinheiten, für die entsprechend leichter ein Bauraum gefunden werden kann als beispielsweise für die größere Baueinheit einer kompakten Motor-Pumpe-Einheit. Die erfindungsgemäße Vorrichtung schafft somit eine größere Flexibilität und vereinfacht das Auffinden des notwendigen Bauraums, da der Versorgungsstrang in der Regel beliebig ausgestaltet werden kann (hinsichtlich Länge, Verlauf, Form, etc.). Dabei kann der Versorgungsstrang mechanisch starr oder flexibel ausgestaltet sein.

Bevorzugt korrespondieren in der erfindungsgemäßen Vorrichtung das Motor-Pumpe-Gehäuse und das Elektronikeinheit-Gehäuse miteinander, das heißt sie weisen jeweils korrespondierende Gehäuseschnittstellen auf, so dass das Motor-Pumpe-Gehäuse und das Elektronikeinheit-Gehäuse zur Ausbildung einer gemeinsamen Einhausung von Elektronikeinheit und Motor-Pumpe-Gruppe zusammengefügt werden können, wobei die Gehäuseschnittstellen beispielsweise (umlaufende) Stoßkanten an den korrespondierenden Gehäuseschnittstellen aufweisen, die bevorzugt unmittelbar aneinander liegen bzw. aneinander stoßen. In einer bevorzugten Variante wird dabei eine gemeinsame Einhausung von Elektronikeinheit und Motor-Pumpe-Gruppe ausschließlich von dem Elektronikeinheit-Gehäuse und dem Motor-Pumpe-Gehäuse geschaffen, so dass die gemeinsame Einhausung (nur bzw. genau) aus dem Elektronikeinheit-Gehäuse und dem Motor-Pumpe-Gehäuse besteht. In einer alternativen Variante schaffen Elektronikeinheit-Gehäuse, Motor-Pumpe-Gehäuse und genau ein oder mehrere weitere Teilgehäuse die gemeinsame Einhausung von Elektronikeinheit und Motor-Pumpe-Gruppe. Die gemeinsame Einhausung von Elektronikeinheit und Motor-Pumpe-Gruppe bildet dann eine kompakte Motor-Pumpe-Einheit (mit genau einer Baueinheit).

Entsprechend sind Motor-Pumpe-Gehäuse und Elektronikeinheit-Gehäuse somit bevorzugt eingerichtet, wahlweise eine kompakte Motor-Pumpe-Einheit teilweise oder vollständig auszubilden. Entsprechend ist es möglich, Gleichteile für beide Ausführungsformen (erfindungsgemäßes Motor-Pumpe-System und kompakte Motor-Pumpe-Einheit) zu verwenden, was zudem eine hohe Anpassungsfähigkeit an verschiedene Bauraumverhältnisse gestattet.

Der Elektromotor bzw. Elektromotorgenerator der Motor-Pumpe-Gruppe ist bevorzugt ein bürstenloser, permanenterregter Motor, insbesondere Synchronmotor, insbesondere DrehstromSynchronmotor, mit einem Stator, dessen Magnetspulen über bevorzugt genau drei Motorphasenzuleitungen bzw. Magnetspulenzuleitungen versorgt werden und ein Drehfeld für einen mit Permanentmagneten besetzten Rotor erzeugen. Der Elektromotor ist dabei bevorzugt ein drehzahlvariabler Antrieb, der als Stellmotor betreibbar und dazu eingerichtet und vorgesehen ist, vorbestimmte Stellungen bzw. Positionen gezielt anzufahren und/oder zu halten. Der Elektromotor und die Ansteuerung (Elektronikeinheit) schaffen weiterhin bevorzugt einen bidirektionalen Antrieb, der in beiden Rotationsrichtungen betrieben werden kann, und besonders bevorzugt auch Vier-Quadranten-fähig ist, das heißt er kann in beide Rotationsrichtungen auch als elektrischer Generator betrieben werden (Elektromotorgenerator) und damit auch hydraulische Energie aus dem System, beispielsweise aus dem Fahrwerk, ausleiten bzw. entnehmen und in elektrische Energie wandeln.

Die hydraulische Pumpe der Motor-Pumpe-Gruppe ist bevorzugt eine Zahnradpumpe, besonders bevorzugt eine Innenzahnradpumpe. Sie ist bevorzugt leckagekompensiert, das heißt sie weist nur kleine und/oder vernachlässigbare Leckagen auf, so dass die geförderte Hydraulikfluidmenge mit der Rotation bzw. der Anzahl von Rotationen fest verknüpft ist (hoher volumetrischer Wirkungsgrad). Entsprechend ist bevorzugt die Motor-Pumpe-Gruppe als Stellpumpe bzw. Stellantrieb für einen Verbraucher, insbesondere Stoßdämpfer, betreibbar und beispielsweise geeignet, vorbestimmte hydraulische Stellungen bzw. Positionen des Verbrauchers gezielt anzufahren und zu halten. Das hydraulische System weist in der Regel entsprechend keinen drucklosen Tank auf und/oder der Elektromotor wird bevorzugt nicht im Dauerbetrieb und/oder dauerhaft mit konstanter Rotationsgeschwindigkeit betrieben. Eine Motor-Pumpe-Gruppe mit einer leckagekompensierten Innenzahnradpumpe für den Reversierbetrieb ist beispielsweise aus der DE 10 2014 103 958 A1 bekannt, deren Offenbarungsgehalt, insbesondere hinsichtlich der Ausgestaltung der Innenzahnradmaschine (Axialdichtscheiben, Radialdichtelemente, etc.), in den Offenbarungsgehalt der vorliegenden Schrift aufgenommen wird.

Bevorzugt umfasst die Elektronikeinheit-Einhausung und/oder das Elektronikeinheit-Gehäuse auf der Außenseite, als elektrische Schnittstellen zumindest oder genau eine Busschnittstelle (beispielsweise für einen CAN-Bus oder einen LIN-Bus), genau eine Versorgungsspannungs-Schnittstelle, insbesondere für eine Hochvolt-Spannung von beispielsweise 48V oder mehr, 400V oder mehr, oder 800V oder mehr, und genau eine Schnittstelle oder einen Durchlass für den bzw. jeden Versorgungsstrang.

In der Motor-Pumpe-Gruppe sind die hydraulische Pumpe und der Elektromotor bzw. Elektromotorgenerator miteinander in der Regel über eine rotierbare Motorwelle fest verbunden, wobei die Motorwellenachse in der Regel auch eine Längsachse für die Motor-Pumpe-Gruppe bildet. Das Motor-Pumpe-Gehäuse ist in der Regel ein mehrstückiges Gehäuse und besteht beispielsweise
- aus einem (ein- oder mehrstückigen) Motorgehäuse, das denjenigen Abschnitt oder Teil des Motor-Pumpe-Gehäuses bildet, der den Elektromotor bzw. Elektromotorgenerator beherbergt und bevorzugt teilweise oder vollständig umschließt, und
- aus einem Pumpengehäuse, das denjenigen Abschnitt oder Teil des Motor-Pumpe-Gehäuses bildet, der die Pumpe beherbergt und bevorzugt teilweise oder vollständig umschließt. Alternativ kann das Motor-Pumpe-Gehäuse auch ein einstückiges Gehäuse sein, in dem Motor- und Pumpengehäuse entsprechende Gehäuseabschnitte bilden.

Das Pumpengehäuse bildet oder umfasst beispielsweise auch einen Pumpendeckel, der vorzugsweise die Pumpe an einer axialen Stirnseite des Motor-Pumpe-Gehäuses (vollständig) umschließt und/oder (auch) die axiale Stirnseite des Motor-Pumpe-Gehäuses bildet. Durch die axiale Stirnseite verläuft die Achse bzw. die Verlängerung der Motorwelle der Motor-Pumpe-Gruppe. Die axiale Stirnseite verläuft bevorzugt normal bzw. im Wesentlichen normal zur Motorwellenachse und/oder ist bevorzugt im Wesentlichen oder vollständig plan ausgebildet.

Weiterhin weist bevorzugt die Motor-Pumpe-Gruppe oder der Elektromotor bzw. Elektromotorgenerator innerhalb des Motor-Pumpe-Gehäuses bzw. innerhalb des Motorgehäuses keine elektrischen Schaltbauteile und/oder keine integrierten (Elektronik-)Bauteile auf.

In einer bevorzugten Ausgestaltung der erfindungsgemäßen Vorrichtung bzw. des erfindungsgemäßen Motor-Pumpe-Systems bildet deren Motor-Pumpe-Gruppe eine erste Motor-Pumpe-Gruppe und deren Komponenten und beigeordnete Baugruppen bilden jeweils erste Komponenten und Baugruppen, das heißt der Elektromotor bildet einen ersten Elektromotor, die hydraulische Pumpe bildet eine erste hydraulische Pumpe, das Motor-Pumpe-Gehäuse bildet ein erstes Motor-Pumpe-Gehäuse (für die erste Motor-Pumpe-Gruppe), die Motor-Pumpe-Einhausung bildet eine erste Motor-Pumpe-Einhausung und der Versorgungsstrang bildet einen ersten Versorgungsstrang. Die Vorrichtung umfasst in der bevorzugten Ausgestaltung weiterhin
- eine zweite Motor-Pumpe-Gruppe mit einer zweiten hydraulischen Pumpe und einem zweiten Elektromotor zum Antreiben der zweiten hydraulischen Pumpe.

Dabei ist die zweite Motor-Pumpe-Gruppe in einem zweiten Motor-Pumpe-Gehäuse angeordnet und die Elektronikeinheit bildet eine gemeinsame Elektronikeinheit zum Ansteuern von erster und zweiter Motor-Pumpe-Gruppe.

In einer ersten Variante dieser bevorzugten Ausgestaltung der erfindungsgemäßen Vorrichtung bzw. des Motor-Pumpe-Systems mit zwei Motor-Pumpe-Gruppen bildet das zweite Motor-Pumpe-Gehäuse zugleich eine zweite Motor-Pumpe-Einhausung oder ein Teil bzw. ein Teilgehäuse einer zweiten Motor-Pumpe-Einhausung und/oder das zweite Motor-Pumpe-Gehäuse ist eingerichtet, ein Teil bzw. ein Teilgehäuse einer zweiten Motor-Pumpe-Einhausung zu sein (die von der ersten Motor-Pumpe-Einhausung und der Elektronikeinheit-Einhausung verschieden ist). Die Elektronikeinheit und die zweite Motor-Pumpe-Gruppe sind dann über einen zweiten Versorgungsstrang elektrisch verbunden. Bevorzugt ist/sind die zweite Motor-Pumpe-Gruppe, das zweite Motor-Pumpe-Gehäuse, die zweite Motor-Pumpe-Einhausung und/oder der Versorgungsstrang wie oben (jeweils für Motor-Pumpe-Gruppe, Motor-Pumpe-Gehäuse, Motor-Pumpe-Einhausung bzw. Versorgungsstrang) beschrieben ausgebildet und bevorzugt identisch zu jeweils der ersten Motor-Pumpe-Gruppe, dem ersten Motor-Pumpe-Gehäuse, der ersten Motor-Pumpe-Einhausung und/oder dem ersten Versorgungsstrang ausgebildet.

In dieser ersten Variante der erfindungsgemäßen Vorrichtung mit zwei Motor-Pumpe-Gruppen wird somit ein Motor-Pumpe-System mit drei (kleinen) Baueinheiten geschaffen, für die entsprechend leichter ein Bauraum gefunden werden kann als beispielsweise für die größere Baueinheit eines kompakten MPE-Achssatzes.

Die erfindungsgemäße Vorrichtung schafft somit eine größere Flexibilität und vereinfacht das Auffinden des notwendigen Bauraums.

In einer zweiten Variante dieser bevorzugten Ausgestaltung der erfindungsgemäßen Vorrichtung bzw. des Motor-Pumpe-Systems mit zwei Motor-Pumpe-Gruppen bildet das zweite Motor-Pumpe-Gehäuse einen Teil der Elektronikeinheit-Einhausung, wobei die Elektronikeinheit-Einhausung das Elektronikeinheit-Gehäuse und das zweite Motor-Pumpe-Gehäuse umfasst und bevorzugt genau daraus besteht.

In dieser zweiten Variante der erfindungsgemäßen Vorrichtung mit zwei Motor-Pumpe-Gruppen beherbergt die Elektronikeinheit-Einhausung neben der Elektronikeinheit auch die zweite Motor-Pumpe-Gruppe.

In einer bevorzugten Variante wird die Elektronikeinheit-Einhausung ausschließlich von Elektronikeinheit-Gehäuse und zweitem Motor-Pumpe-Gehäuse geschaffen, so dass die Elektronikeinheit-Einhausung aus (nur bzw. genau) dem Elektronikeinheit-Gehäuse und dem zweiten Motor-Pumpe-Gehäuse besteht. In einer alternativen Variante schaffen Elektronikeinheit-Gehäuse, zweites Motor-Pumpe-Gehäuse und genau ein oder mehrere weitere Teilgehäuse die (als Elektronikeinheit-Einhausung bezeichnete) gemeinsame Einhausung von Elektronikeinheit und zweiter Motor-Pumpe-Gruppe.

Die Elektronikeinheit-Einhausung bildet dann eine (kompakte) Motor-Pumpe-Einheit (mit Elektronikeinheit und zweiter Motor-Pumpe-Gruppe) mit einem zusätzlichen (ersten) Versorgungsstrang für die Versorgung der ersten Motor-Pumpe-Gruppe. Somit wird ein Motor-Pumpe-System mit zwei kleinen Baueinheiten geschaffen, für die entsprechend leichter ein Bauraum gefunden werden kann als beispielsweise für die größere Baueinheit eines kompakten MPE-Achssatzes, mit dem zusätzlichen Vorteil kurzer Wege/Zuleitungen zwischen Elektronikeinheit und zweiter Motor-Pumpe-Gruppe.

Bevorzugt korrespondieren in der erfindungsgemäßen Vorrichtung mit zwei Motor-Pumpe-Gruppen die beiden Motor-Pumpe-Gehäuse und das Elektronikeinheit-Gehäuse miteinander, das heißt sie weisen jeweils korrespondierende Gehäuseschnittstellen auf, so dass die beiden Motor-Pumpe-Gehäuse und das Elektronikeinheit-Gehäuse zur Ausbildung einer gemeinsamen Einhausung von Elektronikeinheit und erster und zweiter Motor-Pumpe-Gruppe zusammengefügt werden können, wobei die Gehäuseschnittstellen, beispielsweise (umlaufende) Stoßkanten an den korrespondierenden Gehäuseschnittstellen aufweisen, die bevorzugt unmittelbar aneinander liegen bzw. aneinander stoßen. In einer bevorzugten Variante wird dabei die gemeinsame Einhausung der drei Baugruppen ausschließlich von Elektronikeinheit-Gehäuse und erstem und zweitem Motor-Pumpe-Gehäuse geschaffen, so dass die gemeinsame Einhausung aus (nur bzw. genau) dem Elektronikeinheit-Gehäuse und erstem und zweitem Motor-Pumpe-Gehäuse besteht. In einer alternativen Variante schaffen das Elektronikeinheit-Gehäuse, die beiden Motor-Pumpe-Gehäuse und genau ein oder mehrere weitere Teilgehäuse die gemeinsame Einhausung von Elektronikeinheit und erster und zweiter Motor-Pumpe-Gruppe. Die gemeinsame Einhausung von Elektronikeinheit und Motor-Pumpe-Gruppen bildet dann einen kompakten MPE-Achssatz (mit genau einer Baueinheit).

Entsprechend sind Motor-Pumpe-Gehäuse und Elektronikeinheit-Gehäuse somit bevorzugt eingerichtet, wahlweise einen kompakten Motor-Pumpe-Einheit-Achssatz teilweise oder vollständig auszubilden. Entsprechend ist es möglich Gleichteile für beide Ausführungsformen (Vorrichtung bzw. Motor-Pumpe-System mit zwei Motor-Pumpe-Gruppen, einerseits und kompakter Motor-Pumpe-Einheit-Achssatz, andererseits) zu verwenden, was zudem eine hohe Anpassungsfähigkeit an verschiedene Bauraumverhältnisse gestattet.

In einer weiter bevorzugten Ausgestaltung der erfindungsgemäßen Vorrichtung bzw. des Motor-Pumpe-Systems weist diese(s) insgesamt vier Motor-Pumpe-Gruppen auf (Motor-Pumpe-System mit vier Motor-Pumpe-Gruppen). Diese Ausgestaltung umfasst eine der beiden Varianten der oben beschriebenen erfindungsgemäßen Vorrichtung mit zwei Motor-Pumpe-Gruppen bzw. des Motor-Pumpe-Systems mit zwei Motor-Pumpe-Gruppen und umfasst weiterhin
- eine dritte Motor-Pumpe-Gruppe mit einer dritten hydraulischen Pumpe und einem dritten Elektromotor zum Antreiben der dritten hydraulischen Pumpe, und
- eine vierte Motor-Pumpe-Gruppe mit einer vierten hydraulischen Pumpe und einem vierten Elektromotor zum Antreiben der vierten hydraulischen Pumpe,

wobei die dritte Motor-Pumpe-Gruppe in einem dritten Motor-Pumpe-Gehäuse angeordnet ist, das zugleich eine dritte Motor-Pumpe-Einhausung oder ein Teil bzw. ein Teilgehäuse einer dritten Motor-Pumpe-Einhausung bildet und/oder das eingerichtet ist, ein Teil bzw. ein Teilgehäuse einer dritten Motor-Pumpe-Einhausung zu sein, und
wobei die vierte Motor-Pumpe-Gruppe in einem vierten Motor-Pumpe-Gehäuse angeordnet ist, das zugleich eine vierte Motor-Pumpe-Einhausung oder ein Teil bzw. ein Teilgehäuse einer vierten Motor-Pumpe-Einhausung bildet und/oder das eingerichtet ist, ein Teil bzw. ein Teilgehäuse einer vierten Motor-Pumpe-Einhausung zu sein.

Die Elektronikeinheit und die dritte Motor-Pumpe-Gruppe sind dann über einen dritten Versorgungsstrang elektrisch verbunden und die Elektronikeinheit und die vierte Motor-Pumpe-Gruppe ist über einen vierten Versorgungsstrang elektrisch verbunden. Die Elektronikeinheit bildet eine zentrale, gemeinsame Elektronikeinheit zum Ansteuern von erster, zweiter, dritter und vierter Motor-Pumpe-Gruppe.

Bevorzugt ist/sind die dritte Motor-Pumpe-Gruppe, das dritte Motor-Pumpe-Gehäuse, die dritte Motor-Pumpe-Einhausung und/oder der Versorgungsstrang wie oben (jeweils für Motor-Pumpe-Gruppe, Motor-Pumpe-Gehäuse, Motor-Pumpe-Einhausung bzw. Versorgungsstrang) beschrieben ausgebildet und bevorzugt identisch zu jeweils der ersten Motor-Pumpe-Gruppe, dem ersten Motor-Pumpe-Gehäuse, der ersten Motor-Pumpe-Einhausung und/oder dem ersten Versorgungsstrang ausgebildet. Bevorzugt ist/sind die vierte Motor-Pumpe-Gruppe, das vierte Motor-Pumpe-Gehäuse, die vierte Motor-Pumpe-Einhausung und/oder der Versorgungsstrang wie oben (jeweils für Motor-Pumpe-Gruppe, Motor-Pumpe-Gehäuse, Motor-Pumpe-Einhausung bzw. Versorgungsstrang) beschrieben ausgebildet und bevorzugt identisch zu jeweils der ersten Motor-Pumpe-Gruppe, dem ersten Motor-Pumpe-Gehäuse, der ersten Motor-Pumpe-Einhausung und/oder dem ersten Versorgungsstrang ausgebildet. Bevorzugt sind erste, zweite, dritte und vierte Motor-Pumpe-Gruppe jeweils identisch ausgebildet.

In dieser erfindungsgemäßen Vorrichtung mit vier Motor-Pumpe-Gruppen wird somit ein Motor-Pumpe-System mit (je nach Variante) vier oder fünf (kleinen) Baueinheiten geschaffen, für die entsprechend leicht ein Bauraum gefunden werden kann, während zugleich vier Stoßdämpfer versorgt und zentral angesteuert werden können. Die erfindungsgemäße Vorrichtung mit vier Motor-Pumpe-Gruppen schafft somit eine größere Flexibilität und vereinfacht das Auffinden des notwendigen Bauraums.

Die Elektronikeinheit des Motor-Pumpe-Systems, die eine gemeinsame Elektronikeinheit für alle vier Motor-Pumpe-Gruppen darstellt, steuert dabei mit Vorteil die vier Motor-Pumpe-Gruppen als zentrale Einheit, womit beispielsweise ein übergeordnetes Fahrwerksteuergerät, das die Elektronikeinheit mehrerer wie oben beschriebener Vorrichtungen bzw. Motor-Pumpe-Systeme koordiniert, entfallen kann.

In einer bevorzugten Ausgestaltung der Vorrichtung bzw. des Motor-Pumpe-Systems ist der oder ein Versorgungsstrang oder sind mehrere oder alle Versorgungsstränge steckbar ausgestaltet. Dazu können beispielsweise in dem Versorgungsstrang an einer vorbestimmten Stelle, beispielsweise auf halber Strecke zwischen Elektronikeinheit und Motor-Pumpe-Gruppe, zwei korrespondierende Versorgungsstecker im Versorgungsstrang vorgesehen sein, so dass der Versorgungsstrang zwei Versorgungsstrang-Abschnitte aufweist bzw. in zwei (verschieden oder gleich lange) Versorgungsstrang-Abschnitte unterteilt ist. Weiterhin sind dann bevorzugt je eine Durchführung für den jeweiligen Versorgungsstrang-Abschnitt in den Einhausungen und/oder Gehäusen von Elektronikeinheit und Motor-Pumpe-Gruppe vorgesehen.

Bevorzugt weist alternativ oder zusätzlich die jeweilige Motor-Pumpe-Einhausung bzw. das jeweilige Motor-Pumpe-Gehäuse und/oder die Elektronikeinheit-Einhausung bzw. das Elektronikeinheit-Gehäuse auf der Außenseite einen auf oder an dem jeweiligen Gehäuse befestigten bzw. fest angeordneten Versorgungsstecker auf, der in der Regel zugleich eine GehäuseDurchführung bildet. Der Versorgungsstrang weist dann an einem oder jeweils an beiden Enden einen korrespondierenden Versorgungsstecker auf und ist bevorzugt ununterbrochen.

Bevorzugt ist die von korrespondierenden Versorgungssteckern jeweils geschaffene Steckverbindung dicht, insbesondere wasserdicht oder spritzwasserdicht, womit die Vorrichtung bzw. das Motor-Pumpe-System weiterhin beispielsweise an einer Fahrzeugunterseite verbaut werden kann. Bevorzugt sind alle Versorgungsstränge der Vorrichtung steckbar und identisch ausgebildet.

Eine derartige steckbare Verbindung zwischen Elektronikeinheit und Motor-Pumpe-Gruppe bzw. Elektronikeinheit-Einhausung und Motor-Pumpe-Einhausung vereinfacht die Montage der Vorrichtung im Kraftfahrzeug sowie den Austausch einzelner Baueinheiten.

In einer bevorzugten Ausgestaltung der erfindungsgemäßen Vorrichtung bzw. des Motor-Pumpe-Systems weist der oder ein Versorgungsstrang oder weisen mehrere oder alle Versorgungsstränge (jeweils) zumindest oder genau drei Motorphasenzuleitungen auf.

Die Motorphasenzuleitungen sind beispielsweise Adern bzw. einadrige Leitungen zur Leistungsversorgung des Elektromotors der jeweiligen Motor-Pumpe-Gruppe. Sie verbinden die Elektronikeinheit bzw. eine Leistungselektronik der Elektronikeinheit (unmittelbar) mit den Magnetspulen in der Motor-Pumpe-Gruppe bzw. mit dem Elektromotor bzw. mit dem Stator. Die Motorphasenzuleitungen weisen in der Regel eine besonders hohe Stromleitfähigkeit und/oder Spannungsfestigkeit auf, die beispielsweise gegenüber Signalzuleitungen erhöht ist. Bevorzugt weisen die Motorphasenzuleitungen jeweils einen Leitungsquerschnitt im Bereich von 1 bis 16 mm² auf, der beispielsweise 1, 2, 3, 5, 7, 10, 12, 14 oder 16 mm² betragen kann, wobei jeder der genannten Werte auch eine Ober- oder Untergrenze des genannten Wertebereichs darstellen kann. Alternativ oder zusätzlich weisen die Motorphasenzuleitungen bevorzugt eine Spannungsfestigkeit für die Hochvolt-Spannungslage bzw. die (höchste) Versorgungsspannung der Elektronikeinheit auf und/oder eine Spannungsfestigkeit von wenigstens 48V, 400V oder 800V. Bevorzugt sind sämtliche Motorphasenzuleitungen identisch ausgestaltet.

Im einfachsten Fall besteht der Versorgungsstrang ausschließlich aus Motorphasenzuleitungen. Bevorzugt umfasst der Versorgungsstrang jedoch weiterhin zwei oder mehr Signalzuleitungen zum Ansteuern von weiteren Bauteilen in der Motor-Pumpe-Gruppe, beispielsweise von Drucksensoren. Die Signalleitungen sind dabei bevorzugt für Spannungen bis 12V und Ströme im Milli-Ampere-Bereich (beispielsweise maximal 10 mA) ausgelegt.

Mit Vorteil weist allgemein die Pumpe zumindest einen (integrierten) Drucksensor auf, wie er beispielsweise aus der Druckschrift EP 3 279 476 A1 bekannt ist und deren Offenbarungsgehalt hinsichtlich der Ausgestaltung, Ansteuerung und Anordnung des Drucksensors hiermit in den Offenbarungsgehalt der vorliegenden Schrift aufgenommen wird. Entsprechend ist bevorzugt die Elektronikeinheit zur Ansteuerung von zumindest einem Drucksensor in der hydraulischen Pumpe der Motor-Pumpe-Gruppe eingerichtet, der über den Versorgungsstrang angesteuert wird.

Bevorzugt sind alle Versorgungsstränge nach einer der beschriebenen Varianten aufgebaut. Bevorzugt weisen alle Versorgungsstränge zumindest einen identischen Leitungsquerschnitt und/oder eine identische Spannungsfestigkeit auf, können dabei aber verschiedene Längen aufweisen. Im einfachsten Fall sind alle Versorgungsstränge komplett identisch aufgebaut, was die Montage vereinfacht.

In einer bevorzugten Ausgestaltung der Vorrichtung bzw. des Motor-Pumpe-Systems ist das oder ein Motor-Pumpe-Gehäuse oder sind mehrere oder alle Motor-Pumpe-Gehäuse (jeweils) ein- oder bevorzugt mehrstückig aufgebaut, bevorzugt aus mehreren ein- oder mehrstückigen, miteinander korrespondierenden Gehäusen, die in dem (jeweiligen) Motor-Pumpe-Gehäuse Teilgehäuse bilden, besonders bevorzugt umfassend ein ein- oder mehrstückiges Motorgehäuse und ein ein- oder mehrstückiges Pumpengehäuse oder bestehend daraus. Dadurch kann das Motor-Pumpe-Gehäuse aufwandsarm angepasst werden.

Bevorzugt sind alle Motor-Pumpe-Gehäuse nach einer der beschriebenen Varianten und/oder identisch aufgebaut.

In einer bevorzugten Ausgestaltung der Vorrichtung bzw. des Motor-Pumpe-Systems ist die oder eine Motor-Pumpe-Gruppe oder sind mehrere oder alle Motor-Pumpe-Gruppen (jeweils) mit einem Stoßdämpfer hydraulisch verbunden, insbesondere mit Druckkammern im Dämpferzylinder des Stoßdämpfers. Die Vorrichtung umfasst somit weiterhin einen oder mehrere Stoßdämpfer, der/die jeweils mit einer Motor-Pumpe-Gruppe bzw. deren Pumpe hydraulisch verbunden ist/sind. Die hydraulische Verbindung zwischen einer Motor-Pumpe-Gruppe und dem zugeordneten Stoßdämpfer umfasst beispielsweise (ein Paar) freitragende und/oder flexible Hydraulikleitungen, insbesondere wenn Motor-Pumpe-Gruppe und Stoßdämpfer beabstandet angeordnet sind.

Bevorzugt ist die Motor-Pumpe-Gruppe bzw. das Motor-Pumpe-Gehäuse bzw. die Motor-Pumpe-Einhausung (unmittelbar) am Stoßdämpfer bzw. an dem Dämpferzylinder des Stoßdämpfers angeordnet bzw. befestigt. Dies erlaubt kurze Hydraulikleitungen. Mit Vorteil ist das Pumpengehäuse des Motor-Pumpe-Gehäuses dabei unmittelbar mit dem Stoßdämpfer bzw. dem Dämpferzylinder hydraulisch verbunden, insbesondere ausschließlich über gehäuseinterne Hydraulikleitungen und/oder ohne flexible und/oder freitragende Hydraulikleitungen.

Bevorzugt sind alle Motor-Pumpe-Gruppen nach einer der beschriebenen Varianten und/oder identisch aufgebaut.

Eine erfindungsgemäße Fahrwerkachse umfasst eine erste und eine zweite Motor-Pumpe-Gruppe, die jeweils wie oben beschrieben ausgestaltet sind, sowie einen ersten und einen zweiten hydraulisch ansteuerbaren Stoßdämpfer, die jeweils mit der ersten und einer zweiten Motor-Pumpe-Gruppe hydraulisch verbunden sind, wobei die erste und die zweite Motor-Pumpe-Gruppe jeweils einen Versorgungsstecker aufweisen, der bevorzugt auf dem jeweiligen Motor-Pumpe-Gehäuse oder am Ende eines Versorgungsstrang-Abschnitts angeordnet ist. Die jeweiligen Versorgungsstecker gestatten einen schnellen und sicheren Anschluss der Elektronikeinheit(en) beispielsweise nach Montage der Fahrwerkachse in einem Kraftfahrzeug.

Bevorzugt ist die Fahrwerkachse Bestandteil einer wie oben beschriebenen Vorrichtung (bzw. eines wie oben beschriebenen Motor-Pumpe-Systems) und/oder als deren Bestandteil eingerichtet.

Alternativ oder zusätzlich umfasst eine Fahrwerkachse
- zwei wie oben beschriebene Vorrichtungen bzw. Motor-Pumpe-Systeme mit jeweils einer Motor-Pumpe-Gruppe oder
- eine wie oben beschriebene Vorrichtung bzw. ein Motor-Pumpe-System mit zwei Motor-Pumpe-Gruppen,
sowie zwei hydraulisch ansteuerbare Stoßdämpfer, die jeweils mit einer Motor-Pumpe-Gruppe hydraulisch verbunden sind.

Die Fahrwerkachse ist bevorzugt vormontiert, das heißt die Motor-Pumpe-Einhausungen bzw. Motor-Pumpe-Gehäuse der Motor-Pumpe-Gruppen sind mit der Fahrwerkachse und/oder den Stoßdämpfern fest verbunden und/oder das Hydrauliksystem (das heißt Stoßdämpfer, Pumpe und ggf. Hydraulikzuleitungen) ist mit einem Hydraulikfluid befüllt (und somit betriebsfertig). Bevorzugt sind erste und zweite Motor-Pumpe-Gruppe (und deren Anordnung an der Fahrwerkachse und/oder jeweils zugeordnete Baugruppen wie Motor-Pumpe-Gehäuse, Motor-Pumpe-Einhausung, Stoßdämpfer, Hydraulikzuleitungen, etc.) identisch ausgebildet und/oder die Fahrwerkachse ist symmetrisch bzw. mittensymmetrisch (zu der Fahrwerkachse) ausgebildet.

Bevorzugt sind die Motor-Pumpe-Gruppen mit den jeweiligen Stoßdämpfern jeweils über freitragende und/oder flexible Hydraulikleitungen hydraulisch verbunden oder die Motor-Pumpe-Gehäuse bzw. Motor-Pumpe-Einhausungen sind (unmittelbar) am jeweiligen Stoßdämpfer bzw. an dem Dämpferzylinder des jeweiligen Stoßdämpfers angeordnet bzw. befestigt.

Die Erfindung betrifft weiterhin ein aktives Fahrwerksystem für zumindest eine erste und eine zweite Fahrzeugachse, die jeweils zwei hydraulisch ansteuerbare Stoßdämpfer aufweisen. Im einfachsten Fall umfasst das Fahrwerksystem eine wie oben beschriebene Vorrichtung bzw. ein wie oben beschriebenes Motor-Pumpe-System mit vier Motor-Pumpe-Gruppen, deren Motor-Pumpe-Gruppen bzw. hydraulische Pumpen jeweils mit einem der insgesamt zumindest vier Stoßdämpfer hydraulisch verbunden sind.

Alternativ umfasst das Fahrwerksystem
- für die erste Fahrzeugachse:
   - eine wie oben beschriebene Fahrwerkachse, oder
   - eine wie oben beschriebene Vorrichtung bzw. ein wie oben beschriebenes Motor-Pumpe-System mit zwei Motor-Pumpe-Gruppen, oder
   - zwei wie oben beschriebene Vorrichtungen bzw. zwei wie oben beschriebene Motor-Pumpe-Systeme mit einer Motor-Pumpe-Gruppe, und
- für die zweite Fahrzeugachse und ggf. für weitere Fahrzeugachsen:
   - eine wie oben beschriebene Fahrwerkachse, oder
   - eine wie oben beschriebene Vorrichtung bzw. ein wie oben beschriebenes Motor-Pumpe-System mit zwei Motor-Pumpe-Gruppen oder einen kompakten MPE-Achssatz, oder
   - zwei wie oben beschriebene Vorrichtungen bzw. zwei wie oben beschriebene Motor-Pumpe-Systeme mit einer Motor-Pumpe-Gruppe oder zwei kompakte Motor-Pumpe-Einheiten.

Dabei sind die beiden Motor-Pumpe-Gruppen einer Fahrzeugachse jeweils mit einem der beiden Stoßdämpfer der Fahrzeugachse hydraulisch verbunden.

Bevorzugt sind in jeder Fahrzeugachse die beiden Motor-Pumpe-Gruppen (und deren Anordnung an der Fahrwerkachse und/oder jeweils zugeordnete Baugruppen wie Motor-Pumpe-Gehäuse, Motor-Pumpe-Einhausung, Stoßdämpfer, Hydraulikzuleitungen, etc.) identisch ausgebildet und/oder symmetrisch bzw. mittensymmetrisch (zu einer Fahrzeugmitte) ausgebildet.

### KURZE BESCHREIBUNG DER ZEICHNUNGEN

Die Erfindung wird im Folgenden mit Bezug auf die beiliegenden Zeichnungen beschrieben. Die Zeichnungen sind lediglich schematische Darstellungen und die Erfindung ist nicht auf die speziellen, dargestellten Ausführungsbeispiele beschränkt.
- Figur 1: zeigt eine perspektivische Explosionsansicht eines Motor-Pumpe-Systems mit einer Motor-Pumpe-Gruppe,
- Figur 2: zeigt eine perspektivische Explosionsansicht eines Motor-Pumpe-Systems mit zwei Motor-Pumpe-Gruppen,
- Figur 3: zeigt eine schematische Ansicht einer Fahrwerkachse mit einem Motor-Pumpe-System mit zwei Motor-Pumpe-Gruppen,
- Figur 4: zeigt eine schematische Ansicht eines Fahrwerksystems mit Motor-Pumpe-System mit vier Motor-Pumpe-Gruppen, und
- Figuren 5A bis 5D: zeigen schematische Ansichten eines Fahrwerksystems mit verschiedenen Motor-Pumpe-Systemen.

### DETAILLIERTE BESCHREIBUNG

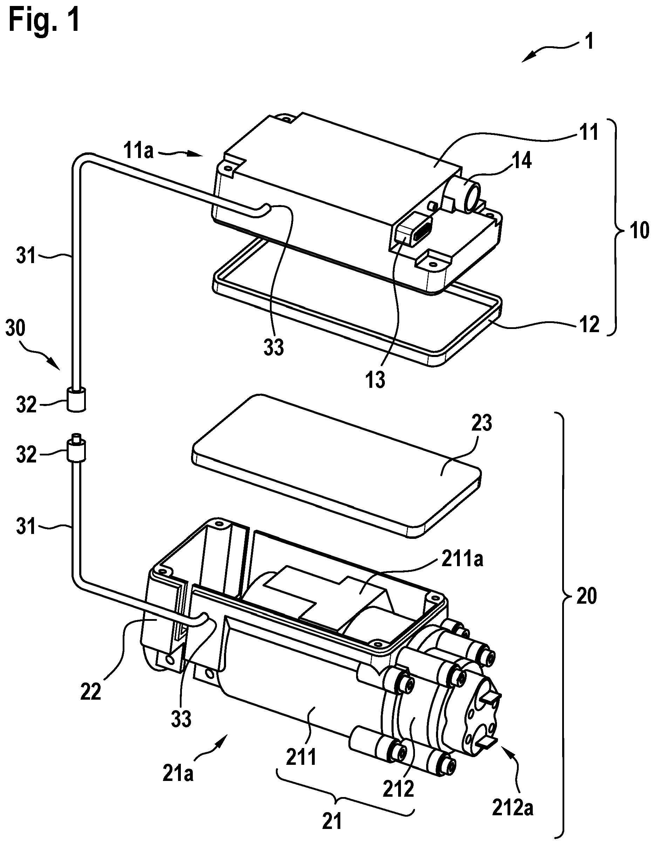

In Figur 1 ist eine perspektivische Explosionsansicht eines Ausführungsbeispiels einer Vorrichtung 1 bzw. eines Motor-Pumpe-Systems 1 zum Bereitstellen von hydraulischer Energie, insbesondere in einem Fahrwerksystem 50 eines Fahrzeugs, mit einer Motor-Pumpe-Gruppe 21a dargestellt. Das Motor-Pumpe-System 1 umfasst eine Elektronikeinheit-Einhausung 10, eine Motor-Pumpe-Einhausung 20 und einen Versorgungsstrang 30. Die Elektronikeinheit-Einhausung 10 ist zusammengefügt aus einem Elektronikeinheit-Gehäuse 11 und einem Teilgehäuse 12. Das Elektronikeinheit-Gehäuse 11 spannt einen Innenraum auf, der eine Elektronikeinheit 11a (umfassend Elektronikbauteile, Leistungselektronik, Leiterplatinen, etc.) beherbergt. Das Elektronikeinheit-Gehäuse 11 umfasst dabei eine Busschnittstelle 13, eine Versorgungsspannungs-Schnittstelle 14, sowie eine Gehäusedurchführung 33 für einen Versorgungsstrang-Abschnitt 31 eines Versorgungsstrangs 30.

Die Motor-Pumpe-Einhausung 20 ist zusammengefügt aus einem Motor-Pumpe-Gehäuse 21, sowie den Teilgehäusen 22 und 23. Das Motor-Pumpe-Gehäuse 21 spannt einen Innenraum auf, der die Motor-Pumpe-Gruppe 21a beherbergt. Das Motor-Pumpe-Gehäuse 21 besteht aus einem in dem Ausführungsbeispiel einstückigen Motorgehäuse 211 und einem mehrstückigen Pumpengehäuse 212, welche jeweils den Elektromotor bzw. Elektromotorgenerator 211a und die hydraulische Pumpe 212a beherbergen. Dabei sind der Elektromotor 211a und die Pumpe 212a über eine nicht dargestellte rotierbare Motorwelle fest verbunden. Weiterhin umfasst das Pumpengehäuse 212 auf der axialen Stirnseite Hydraulikanschlüsse zum Anschluss beispielsweise eines Stoßdämpfers 54, während das Motorgehäuse 211 eine Gehäusedurchführung 33 für einen weiteren Versorgungsstrang-Abschnitt 31 eines Versorgungsstrangs 30 aufweist.

Der Versorgungsstrang 30 ist in dem dargestellten Ausführungsbeispiel steckbar und besteht hierzu aus zwei Versorgungsstrang-Abschnitten 31, welche über Versorgungsstecker 32 verbindbar sind.

In dem dargestellten Ausführungsbeispiel können das Elektronikeinheit-Gehäuse 11, das Motor-Pumpe-Gehäuse 21 sowie das Teilgehäuse 22 (unter Weglassung der Teilgehäuse 12 und 23) auch zu einer gemeinsamen Einhausung zusammengefügt werden, so dass eine kompakte Motor-Pumpe-Einheit geschaffen wird.

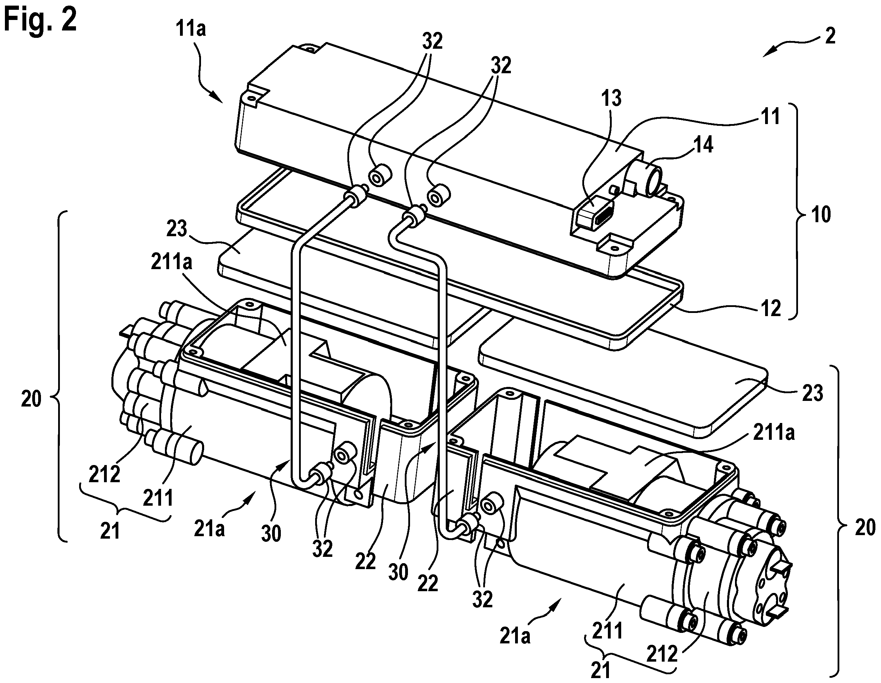

In Figur 2 ist ein Ausführungsbeispiel einer Vorrichtung 2 bzw. eines Motor-Pumpe-Systems 2 dargestellt, welches zwei Motor-Pumpe-Gruppen 21a umfasst. Das Motor-Pumpe-System besteht aus einer Elektronikeinheit-Einhausung 10, zwei Motor-Pumpe-Einhausungen 20 sowie zwei Versorgungssträngen 30, welche jeweils eine Motor-Pumpe-Einhausung 20 bzw. eine Motor-Pumpe-Gruppe 21a mit der Elektronikeinheit-Einhausung 10 bzw. der Elektronikeinheit 11a verbinden. Die Elektronikeinheit 11a bildet dabei eine gemeinsame Elektronikeinheit für beide Motor-Pumpe-Gruppen 21a.

Des weiteren sind (anstelle der in dem Ausführungsbeispiel der Figur 1 gezeigten Gehäusedurchführungen 33) in dem in Figur 2 dargestellten Ausführungsbeispiel in den Motor-Pumpe-Gehäusen 21 sowie in dem Elektronikeinheit-Gehäuse 11 jeweils Versorgungsstecker 32 vorgesehen, über die jeweils ein Versorgungsstrang 30 mit korrespondierenden Versorgungssteckern 32 an beiden Enden eine steckbare elektrische Versorgungs-Verbindung zwischen der Elektronikeinheit 11a und jeweils den Motor-Pumpe-Gruppen 21a herstellt. In einem nicht dargestellten Ausführungsbeispiel ist eine oder sind beide Versorgungsstränge 30 wie in dem Ausführungsbeispiel der Figur 1 ausgebildet.

In dem dargestellten Ausführungsbeispiel können die beiden Motor-Pumpe-Gehäuse 21 und das Elektronikeinheit-Gehäuse 11 (unter Weglassung der Teilgehäuse 12, 22 und 23) auch zu einem kompakten Motor-Pumpe-Einheit-Achssatz zusammengefügt werden.

In einem nicht dargestellten Ausführungsbeispiel ist die Fahrzeugachse 56 bzw. die Fahrwerkachse 51 symmetrisch ausgestaltet, das heißt der hydraulische Anschluss zwischen der jeweiligen Motor-Pumpe-Gruppe 21a und dem Stoßdämpfer 54 ist für beide Räder 55 identisch.

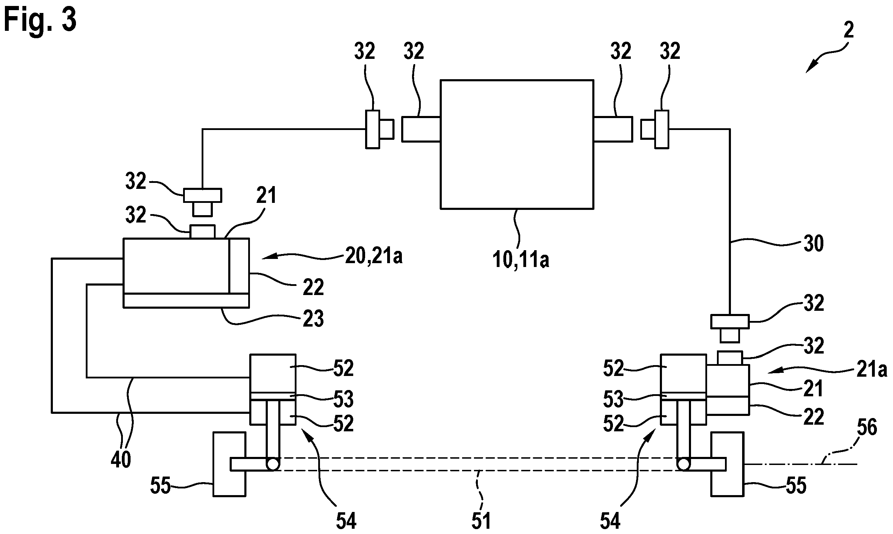

In Figur 3 sind die Stoßdämpfer 54 und die Räder 55 einer Fahrzeugachse 56 mit einer optionalen Fahrwerksachse 51 mit einem daran angeschlossenen Motor-Pumpe-System 2 mit zwei Motor-Pumpe-Gruppen 21a dargestellt. Eine gemeinsame, zentrale Elektronikeinheit 11a, die in einer Elektronikeinheit-Einhausung 10 angeordnet ist, ist über zwei steckbare Versorgungsstränge 30 mit korrespondierenden Versorgungssteckern 32, mit zwei Motor-Pumpe-Gruppen 21a verbunden, die in entsprechenden Motor-Pumpe-Gehäusen 21 angeordnet sind. Die in Figur 3 auf der linken Seite dargestellte Motor-Pumpe-Gruppe 21a ist in einer Motor-Pumpe-Einhausung 20 angeordnet, welche aus einem Motor-Pumpe-Gehäuse und zwei Teilgehäusen 22 und 23 zusammengefügt ist. Die Motor-Pumpe-Gruppe 21a ist über Hydraulikleitungen 40 mit den Druckkammern 52 des Stoßdämpfers 54 verbunden, welche durch einen Kolben 53 getrennt sind.

Die in Figur 3 auf der rechten Seite dargestellte Motor-Pumpe-Gruppe 21a ist dagegen direkt an dem Stoßdämpfer 54 bzw. dessen Dämpferzylinder angeordnet. Entsprechend kann zur Schaffung einer dichten Einhausung um die Motor-Pumpe-Gruppe 21a der Stoßdämpfer 54 bzw. dessen Dämpferzylinder die abschließende Funktion des Teilgehäuses 23 übernehmen, so dass hier eine dichte Einhausung für die Motor-Pumpe-Gruppe 21a durch den Stoßdämpfer 54 bzw. die Außenseite des Stoßdämpfers 54 sowie das Motor-Pumpe-Gehäuse 21 und das Teilgehäuse 22 geschaffen wird.

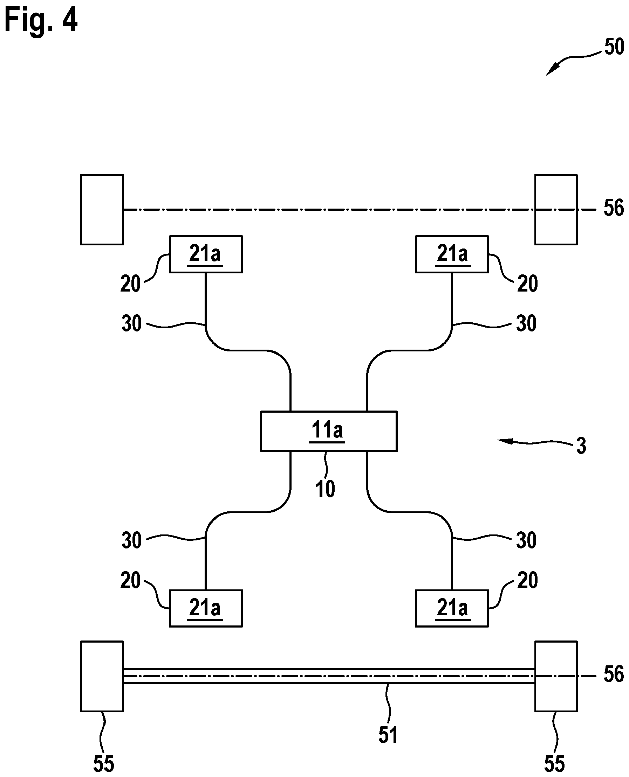

In Figur 4 ist ein Fahrwerksystem 50 dargestellt. Dieses umfasst eine Vorrichtung 3 bzw. ein Motor-Pumpe-System 3 mit vier Motor-Pumpe-Gruppen 21a mit einer zentralen, gemeinsamen Elektronikeinheit 11a. Entsprechend umfasst das Motor-Pumpe-System 3 eine Elektronikeinheit-Einhausung 10 sowie vier Motor-Pumpe-Einhausungen 20, die über jeweils einen (steckbaren) Versorgungsstrang 30 mit der Elektronikeinheit-Einhausung 10 verbunden sind. Die hydraulische Verbindung zwischen den Motor-Pumpe-Gruppen 21a und den jeweiligen (nicht darstellten) Dämpferzylindern 54 der Räder 55 geschieht beispielsweise über eine der beiden Varianten, wie sie im Ausführungsbeispiel der Figur 3 dargestellt sind. Die beiden Fahrzeugachsen 56 können optional eine Fahrwerkachse 51 umfassen.

Dabei ist die hydraulische Anbindung zwischen einer Motor-Pumpe-Gruppe 21a und dem jeweiligen Stoßdämpfer 54 an beiden Rädern 55 einer gegebenen Fahrzeugachse identisch.

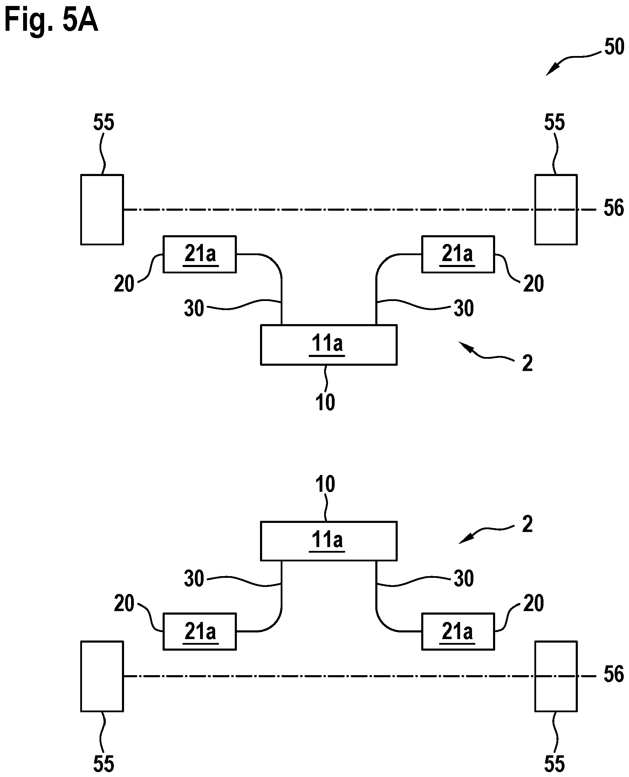

In Figur 5A ist ein weiteres Ausführungsbeispiel eines Fahrwerksystems 50 dargestellt. Dieses umfasst wiederum zwei Fahrzeugachsen 56 sowie an beiden Achsen ein Motor-Pumpe-System 2 mit zwei Motor-Pumpe-Gruppen 21a. Entsprechend umfassen beide Fahrzeugachsen 56 jeweils Motor-Pumpe-Systeme 2 mit drei Baueinheiten, einer Elektronikeinheit-Einhausung 10 sowie zwei Motor-Pumpe-Einhausungen 20, welche jeweils über einen Versorgungsstrang 30 verbunden sind.

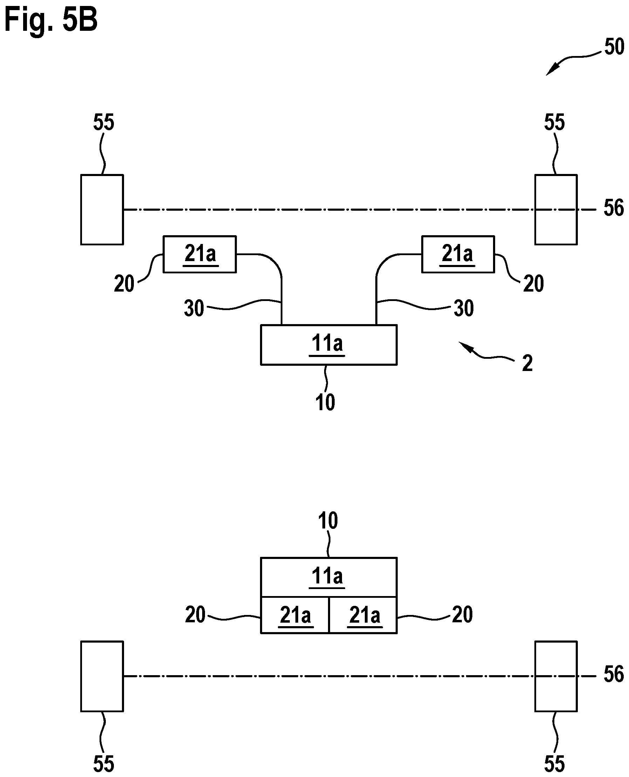

In den Figuren 5B bis 5D sind weitere Ausführungsbeispiele eines Fahrwerksystems 50 dargestellt, wobei die in den Figuren obere Fahrzeugachse 56 jeweils wie in dem Ausführungsbeispiel der Figur 5A ausgebildet ist.

In der in Figur 5B unten dargestellten Fahrzeugachse 56 ist jedoch ein kompakter Motor-Pumpe-Einheit-Achssatz vorgesehen.

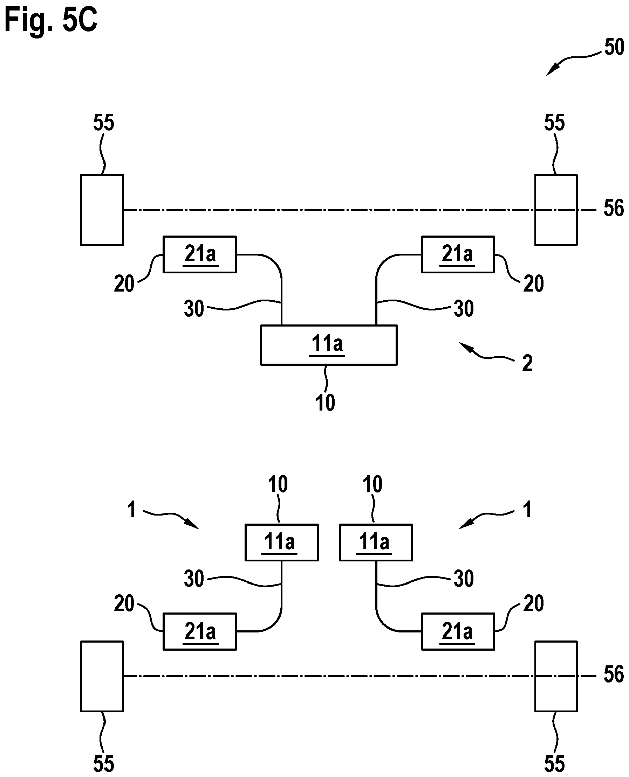

In der in Figur 5C unten dargestellten Fahrzeugachse 56 sind zwei Motor-Pumpe-Systeme 1 mit jeweils einer Motor-Pumpe-Gruppe 21a vorgesehen.

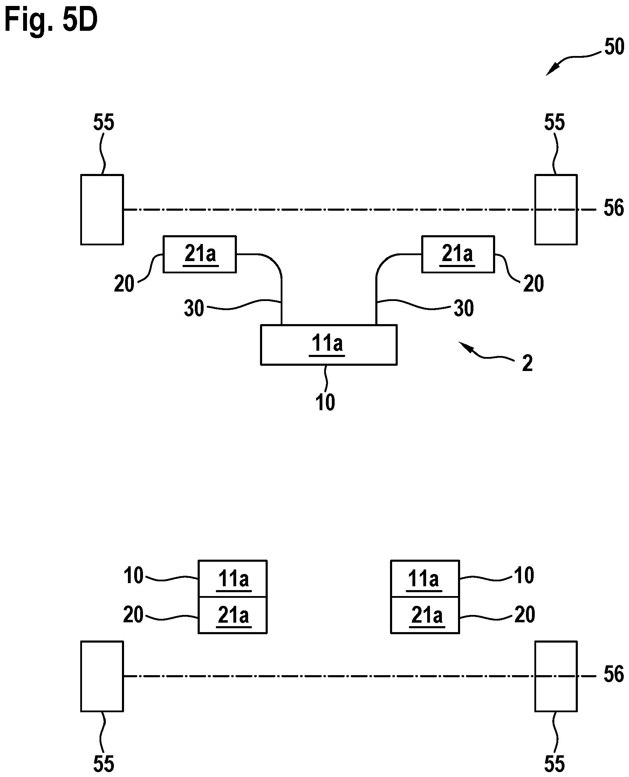

In der in Figur 5D unten dargestellten Fahrzeugachse 56 sind zwei kompakte Motor-Pumpe-Einheiten vorgesehen.

### BEZUGSZEICHENLISTE

- 1: Motor-Pumpe-System mit einer Motor-Pumpe-Gruppe 21a
- 2: Motor-Pumpe-System mit zwei Motor-Pumpe-Gruppen 21a
- 3: Motor-Pumpe-System mit vier Motor-Pumpe-Gruppen 21a
- 10: Elektronikeinheit-Einhausung
- 11: Elektronikeinheit-Gehäuse
- 11a: Elektronikeinheit
- 12: Teilgehäuse
- 13: Busschnittelle
- 14: Versorgungsspannungs-Schnittstelle
- 20: Motor-Pumpe-Einhausung
- 21: Motor-Pumpe-Gehäuse
- 21a: Motor-Pumpe-Gruppe
- 211: Motorgehäuse
- 211a: Elektromotor, Elektromotorgenerator
- 212: Pumpengehäuse
- 212a: hydraulische Pumpe
- 22: Teilgehäuse
- 23: Teilgehäuse
- 30: Versorgungsstrang
- 31: Versorgungsstrang-Abschnitt
- 32: Versorgungsstecker
- 33: Gehäusedurchführung
- 40: Hydraulikleitung
- 50: Fahrwerksystem
- 51: Fahrwerkachse
- 52: Druckkammer
- 53: Kolben
- 54: Stoßdämpfer
- 55: Rad
- 56: Fahrzeugachse

## Patentansprüche

1. Vorrichtung (1) zum Bereitstellen von hydraulischer Energie, insbesondere in einem Fahrwerksystem (50) eines Fahrzeugs, umfassend
- eine Motor-Pumpe-Gruppe (21a), umfassend eine hydraulische Pumpe (212a) und einen Elektromotor (211a) zum Antreiben der hydraulischen Pumpe, und
- eine Elektronikeinheit (11a) zum Ansteuern der Motor-Pumpe-Gruppe,
wobei die Motor-Pumpe-Gruppe in einem Motor-Pumpe-Gehäuse (21) angeordnet ist, das eine Motor-Pumpe-Einhausung (20) bildet oder Teil einer Motor-Pumpe-Einhausung ist,
wobei die Elektronikeinheit in einem Elektronikeinheit-Gehäuse (11) angeordnet ist, das eine Elektronikeinheit-Einhausung (10) bildet oder Teil einer Elektronikeinheit-Einhausung ist, und
wobei die Elektronikeinheit und die Motor-Pumpe-Gruppe über einen Versorgungsstrang (30) elektrisch verbunden sind.

2. Vorrichtung (1) nach Anspruch 1, **dadurch gekennzeichnet, dass** das Motor-Pumpe-Gehäuse (21) und das Elektronikeinheit-Gehäuse (11) miteinander korrespondieren und/oder dazu eingerichtet sind, teilweise oder vollständig eine gemeinsame Einhausung zu schaffen.

3. Vorrichtung (2) nach einem der vorhergehenden Ansprüche, deren Motor-Pumpe-Gruppe (21a) eine erste Motor-Pumpe-Gruppe (21a) bildet, wobei die Vorrichtung weiterhin umfasst
- eine zweite Motor-Pumpe-Gruppe (21a), umfassend eine zweite hydraulische Pumpe (212a) und einen zweiten Elektromotor (211a) zum Antreiben der zweiten hydraulischen Pumpe,
wobei die zweite Motor-Pumpe-Gruppe in einem zweiten Motor-Pumpe-Gehäuse (21) angeordnet ist und wobei die Elektronikeinheit eine gemeinsame Elektronikeinheit zum Ansteuern von erster und zweiter Motor-Pumpe-Gruppe bildet,
und
- wobei das zweite Motor-Pumpe-Gehäuse eine zweite Motor-Pumpe-Einhausung (20) bildet oder Teil einer zweiten Motor-Pumpe-Einhausung ist, und
- wobei die Elektronikeinheit und die zweite Motor-Pumpe-Gruppe über einen zweiten Versorgungsstrang (30) elektrisch verbunden sind,
oder
- wobei das zweite Motor-Pumpe-Gehäuse Teil der Elektronikeinheit-Einhausung (10) ist, und/oder
- wobei die Elektronikeinheit-Einhausung (10) das Elektronikeinheit-Gehäuse (11) und das zweite Motor-Pumpe-Gehäuse umfasst, bevorzugt daraus besteht.

4. Vorrichtung (2) nach Anspruch 3, **dadurch gekennzeichnet, dass** das erste Motor-Pumpe-Gehäuse (21), das zweite Motor-Pumpe-Gehäuse (21) und das Elektronikeinheit-Gehäuse (11) miteinander korrespondieren und/oder dazu eingerichtet sind, teilweise oder vollständig eine gemeinsame Einhausung zu schaffen.

5. Vorrichtung (3) nach Anspruch 3 oder 4, weiterhin umfassend
- eine dritte Motor-Pumpe-Gruppe (21a), umfassend eine dritte hydraulische Pumpe (212a) und einen dritten Elektromotor (211a) zum Antreiben der dritten hydraulischen Pumpe,
wobei die dritte Motor-Pumpe-Gruppe in einem dritten Motor-Pumpe-Gehäuse (21) angeordnet ist, das eine dritte Motor-Pumpe-Einhausung (20) bildet oder Teil einer dritten Motor-Pumpe-Einhausung ist, und
wobei die Elektronikeinheit (11a) und die dritte Motor-Pumpe-Gruppe über einen dritten Versorgungsstrang (30) elektrisch verbunden sind,
und weiterhin umfassend
- eine vierte Motor-Pumpe-Gruppe (21a), umfassend eine vierte hydraulische Pumpe (212a) und einen vierten Elektromotor (211a) zum Antreiben der vierten hydraulischen Pumpe,
wobei die vierte Motor-Pumpe-Gruppe in einem vierten Motor-Pumpe-Gehäuse (21) angeordnet ist, das eine vierte Motor-Pumpe-Einhausung (20) bildet oder Teil einer vierten Motor-Pumpe-Einhausung ist, und
wobei die Elektronikeinheit und die vierte Motor-Pumpe-Gruppe über einen vierten Versorgungsstrang (30) elektrisch verbunden sind, und
- wobei die Elektronikeinheit eine gemeinsame Elektronikeinheit zum Ansteuern von erster, zweiter, dritter und vierter Motor-Pumpe-Gruppe bildet, und
- wobei bevorzugt erste, zweite, dritte und vierte Motor-Pumpe-Gruppe identisch ausgebildet sind.

6. Vorrichtung (1, 2, 3) nach einem der vorhergehenden Ansprüche, wobei der oder zumindest ein Versorgungsstrang (30) steckbar ist und wobei bevorzugt ein Versorgungsstecker (32) auf einer Außenseite der Elektronikeinheit-Einhausung (10) und/oder der jeweiligen Motor-Pumpe-Einhausung (20) angeordnet ist.

7. Vorrichtung (1, 2, 3) nach einem der vorhergehenden Ansprüche, wobei der oder zumindest ein Versorgungsstrang (30) zumindest oder genau drei Motorphasenzuleitungen aufweist, sowie bevorzugt zwei oder mehr Signalzuleitungen.

8. Vorrichtung (1, 2, 3) nach einem der vorhergehenden Ansprüche, wobei das oder zumindest ein Motor-Pumpe-Gehäuse (21) ein- oder mehrstückig aufgebaut ist, bevorzugt umfassend ein ein- oder mehrstückiges Motorgehäuse (211) und ein ein- oder mehrstückiges Pumpengehäuse (212) oder bestehend daraus.

9. Vorrichtung (1, 2, 3) nach einem der vorhergehenden Ansprüche, wobei die oder zumindest eine Motor-Pumpe-Gruppe (21a) mit einem Stoßdämpfer (54) hydraulisch verbunden ist und bevorzugt an dem Stoßdämpfer angeordnet und/oder über Hydraulikleitungen (40) verbunden ist.

10. Fahrwerkachse (51) umfassend
- eine erste Motor-Pumpe-Gruppe (21a), umfassend eine erste hydraulische Pumpe (212a) und einen ersten Elektromotor (211a) zum Antreiben der ersten hydraulischen Pumpe, wobei die erste Motor-Pumpe-Gruppe in einem ersten Motor-Pumpe-Gehäuse (21) angeordnet ist, das eine erste Motor-Pumpe-Einhausung (20) bildet oder Teil einer ersten Motor-Pumpe-Einhausung ist,
- eine zweite Motor-Pumpe-Gruppe (21a), umfassend eine zweite hydraulische Pumpe (212a) und einen zweiten Elektromotor (211a) zum Antreiben der zweiten hydraulischen Pumpe, wobei die zweite Motor-Pumpe-Gruppe in einem zweiten Motor-Pumpe-Gehäuse (21) angeordnet ist, das eine zweite Motor-Pumpe-Einhausung (20) bildet oder Teil einer zweiten Motor-Pumpe-Einhausung ist,
- einen ersten und einen zweiten hydraulisch ansteuerbaren Stoßdämpfer (54), die jeweils mit der ersten und einer zweiten Motor-Pumpe-Gruppe hydraulisch verbunden sind,
wobei die erste und die zweite Motor-Pumpe-Gruppe jeweils einen Versorgungsstecker (32) aufweisen, der bevorzugt auf dem jeweiligen Motor-Pumpe-Gehäuse und/oder am Ende eines Versorgungsstrangs (30) oder am Ende eines Versorgungsstrangs-Abschnitts (31) angeordnet ist, und
wobei die Fahrwerkachse bevorzugt als Bestandteil einer Vorrichtung (2, 3) nach einem der Ansprüche 2 bis 9 eingerichtet oder Bestandteil einer Vorrichtung nach einem der Ansprüche 2 bis 9 ist.

11. Fahrwerkachse (51)
- mit zwei Vorrichtungen (1) nach einem der Ansprüche 1 oder 2 und bevorzugt zusätzlich nach einem der Ansprüche 5 bis 9, oder
- mit einer Vorrichtung (2) nach einem der Ansprüche 3 oder 4 und bevorzugt zusätzlich nach einem der Ansprüche 5 bis 9, und
- mit einem ersten und einem zweiten hydraulisch ansteuerbaren Stoßdämpfer (54), die jeweils mit den Motor-Pumpe-Gruppen (21a) hydraulisch verbunden sind.

12. Fahrwerkachse (51) nach Anspruch 10 oder 11,
wobei die Fahrwerkachse vormontiert ist und/oder die Motor-Pumpe-Gehäuse (21) und/oder Motor-Pumpe-Einheiten mit der Fahrwerkachse oder den jeweiligen Stoßdämpfern (54) fest verbunden sind, und/oder
wobei die Motor-Pumpe-Gruppen (21a) mit den jeweiligen Stoßdämpfern jeweils über Hydraulikleitungen (40) verbunden sind oder die Motor-Pumpe-Gehäuse bzw. Motor-Pumpe-Einhausungen (20) am jeweiligen Stoßdämpfer bzw. an einem Dämpferzylinder des jeweiligen Stoßdämpfers angeordnet bzw. befestigt sind.

13. Fahrwerksystem (50) für eine erste und eine zweite Fahrzeugachse (56) mit jeweils zwei hydraulisch ansteuerbaren Stoßdämpfern (54), umfassend:
eine Vorrichtung (3) nach einem der Ansprüche 5 bis 9, wobei die vier Motor-Pumpe-Gruppen (21a) bzw. die hydraulischen Pumpen (212) der vier Motor-Pumpe-Gruppen jeweils mit einem Stoßdämpfer verbunden sind.

14. Fahrwerksystem (50) für zumindest eine erste und eine zweite Fahrzeugachse (56) mit jeweils zwei hydraulisch ansteuerbaren Stoßdämpfern (54), umfassend:
- für die erste Fahrzeugachse:
- eine Fahrwerkachse (51) nach einem der Ansprüche 10 bis 12, oder
- eine Vorrichtung (2) nach einem der Ansprüche 3 oder 4 und bevorzugt zusätzlich nach einem der Ansprüche 5 bis 9, oder
- zwei Vorrichtungen (1) nach einem der Ansprüche 1 oder 2 und bevorzugt zusätzlich nach einem der Ansprüche 5 bis 9, und
- für die zweite Fahrzeugachse und bevorzugt weitere Fahrzeugachsen:
- eine Fahrwerkachse nach einem der Ansprüche 10 bis 12, oder
- eine Vorrichtung nach einem der Ansprüche 3 oder 4 und bevorzugt zusätzlich nach einem der Ansprüche 5 bis 9, oder einen Motor-Pumpe-Einheit-Achssatz, oder
- zwei Vorrichtungen nach einem der Ansprüche 1 oder 2 und bevorzugt zusätzlich nach einem der Ansprüche 5 bis 9, oder zwei Motor-Pumpe-Einheiten,
wobei die beiden Motor-Pumpe-Gruppen (21a) einer Fahrzeugachse mit den beiden Stoßdämpfern der Fahrzeugachse hydraulisch verbunden sind.
